# EUROPÄISCHE PATENTSCHRIFT

(11) **EP 2 819 846 B1**
(45) Veröffentlichungstag und Bekanntmachung des Hinweises auf die Patenterteilung: **14.12.2016**
(21) Anmeldenummer: 13707604.8
(22) Anmeldetag: 25.02.2013
(51) Int. Cl.: B32B 27/08, B32B 27/36, G06K 19/00

(54) **DOKUMENT UND VERFAHREN ZUM HERSTELLEN DES DOKUMENTS**
DOCUMENT, AND METHOD FOR PRODUCING THE DOCUMENT
DOCUMENT ET PROCÉDÉ POUR RÉALISER UN DOCUMENT

(30) Priorität: 01.03.2012 DE 102012203270
(43) Veröffentlichungstag der Anmeldung: 07.01.2015
(73) Patentinhaber: Bundesdruckerei GmbH, 10969 Berlin (DE)
(72) Erfinder: FISCHER, Jörg, 13053 Berlin (DE); MUTH, Oliver, 12277 Berlin (DE); PAESCHKE, Manfred, 16348 Wandlitz (DE); TIETKE, Markus, 12247 Berlin (DE); KLOESER, Joachim, 10779 Berlin (DE); DONATH, Denis, 16348 Wandlitz (DE); FERBER, Alexander, 12105 Berlin (DE); TRÖLENBERG, Stefan, 15749 Mittenwalde OT Ragow (DE); MARQUES, Joao, 10437 Berlin (DE)
(74) Vertreter: Bressel, Burkhard
(86) Internationale Anmeldenummer: PCT/EP2013/053735
(87) Internationale Veröffentlichungsnummer: WO 2013/127748

(56) Entgegenhaltungen:
- EP-A2- 1 842 689
- WO-A1-2009/056352
- DE-A1-102007 052 949
- DE-A1-102009 060 862
- DE-A1-102010 028 444
- HAGHIRI YAHYA: "Vom Plastik zur Chipkarte", VOM PLASTIK ZUR CHIPKARTE: WEGWEISER ZUM AUFBAU UND ZURHERSTELLUNG VON CHIPKARTEN, XX, XX, 1. Januar 1999 (1999-01-01), Seiten 26-29,240, XP002254868,

## Beschreibung

Die vorliegende Erfindung betrifft ein Dokument, insbesondere ein Wert- und/oder Sicherheitsdokument, sowie ein Verfahren zum Herstellen des Dokuments. Das Dokument enthält eine elektrische Schaltung, die durch eine elektrische Leiterzugstruktur und mindestens ein mit der elektrischen Leiterzugstruktur elektrisch verbundenes elektronisches Bauelement auf einer eine der Folienlagen des Dokuments bildenden Trägerfolienlage gebildet ist. Ein Wert- und/oder Sicherheitsdokument kann beispielsweise eine Smartcard und/oder ein Identifikationsdokument, sein. Beispielsweise kann das Dokument ein Personalausweis, Reisepass, Zugangsausweis, Führerschein, Fahrzeugbrief, Fahrzeugschein, Firmenausweis, Skipass oder ein sonstiger Berechtigungsausweis, ein Ticket im öffentlichen Personen-Nahverkehr, eine Banknote, Kreditkarte, Scheckkarte, Barzahlungskarte, Eintrittskarte, Identifikationskarte, ein Visum oder dergleichen sein. Das Dokument kann in Form einer Karte mit einer Vorderseite und einer Rückseite vorliegen oder als buchartiges Dokument ausgebildet sein. Es kann im Wesentlichen aus Papier oder auch aus Kunststoff hergestellt sein. Im Falle eines Personalausweises trägt dessen Vorderseite zum Beispiel das Lichtbild sowie den Namen des Inhabers. Die Rückseite kann weitere Angaben enthalten, beispielsweise die Anschrift des Inhabers.

Dokumente, insbesondere Wert- und/oder Sicherheitsdokumente, mit einer elektrischen Schaltung in Form von Chipkarten sind bekannt. Insbesondere werden sogenannte RFID- (radio frequency identification) Karten zum kontaktlosen Datenaustausch für die Identifikation von Personen und Sachen eingesetzt. In derartigen Karten befindet sich eine Transpondereinheit mit einer Antennenstruktur zur induktiven Einkopplung von Energie von einem Lese- oder Schreib-/Lesegerät. Die Transpondereinheit weist hierzu eine Antennenstruktur und ein Halbleiterschaltkreiselement, auch Transponderchip genannt, auf, der mit der Antennenstruktur elektrisch verbunden ist.

Erfindungsgemäß werden unter einem elektronischen Halbleiterschaltungselement insbesondere Halbleiterchips verstanden, insbesondere solche, welche zur Speicherung und Verarbeitung von Daten geeignet sind. Insbesondere umfassen die elektronischen Halbleiterschaltungselemente sogenannte RFID-Chips, welche zur kontaktlosen Kommunikation geeignet sind. RFID-Chips können vergleichsweise einfach ausgebildet sein und z.B. nur eine Seriennummer enthalten und diese bei Aktivierung kontaktlos übermitteln, oder es kann sich um Speicherchips mit Verschlüsselung handeln, wie diese zum Beispiel in elektronischen Reisedokumenten eingesetzt werden.

Die Antennenstruktur kann beispielsweise durch Auflegen und Fixieren eines Drahtes beispielsweise auf einer Trägerfolienlage gebildet werden, wobei die Trägerfolienlage nach dem Fertigstellen der Transpondereinheit zusammen mit weiteren Folienlagen zusammengetragen wird, um einen Dokumentenstapel zu bilden, der anschließend laminiert wird.

Alternativ kann die Antennenstruktur auch durch eine Leiterzugstruktur gebildet werden. Hierzu gibt EP 0 737 935 A2 eine kontaktlose Chipkarte und deren Herstellverfahren an. Die Antenne ist durch einen Leiterzug in Form einer Leiterzugspule gebildet. Die Leiterzugspule ist durch Ätzen hergestellt und mit einem integrierten Halbleiterchip verbunden, indem letzterer kopfüber mit seinen Kontaktstellen auf die Anschlusskontakte der Leiterzugspule aufgesetzt und mit diesen verbunden wird. Der Halbleiterchip ist hierzu zunächst auf einem Substrat montiert, das zusammen mit dem Chip auf die Antenne montiert wird.

In einer anderen Herstellungsvariante gibt beispielsweise DE 10 2010 028 444 A1 an, dass eine Antenne durch Siebdrucken einer Silberleitpaste auf ein Substrat und anschließendes Trocknen erzeugt werden kann. Die in diesem Dokument beschriebene Antenne weist mehrere Windungen auf, die umlaufend entlang des Randes des Dokuments in der durch das Substrat gegebenen Ebene angeordnet sind. Ferner überbrücken eine oder mehrere mittlere Windungen den Chip in einem Überbrückungsbereich. In diesem Bereich weisen die Windungen eine geringere Breite auf als im übrigen Verlauf der Windung. Der Chip ist eine gedünnte integrierte Schaltung, d.h. sie weist eine Dicke von höchstens 200 µm auf. Der Chip kann in Form eines Flip-Chips vorliegen, d.h. eines Chips, der unter Verwendung eines anisotrop leitfähigen Klebers mit den Kontaktstellen nach unten kontaktiert wird.

Ferner gibt DE 10 2008 012 419 A1 einen Polymerschichtverbund für ein Sicherheits- und/oder Wertdokument an. Dieses Dokument weist in einer Ausführungsform zwischen mit flächigen Druckbereichen versehenen Polymerschichten eine elektrische Schaltung auf, die beispielsweise durch einen Computerchip sowie eine Antennenschaltung gebildet ist. Es wird angegeben, dass derartige elektrische Schaltungen für die berührungslose Übertragung von Information von und zu dem Chip im Bereich der Radiofrequenz geeignet seien (RFID). Des weiteren ist als Werkstoff für die Polymerschichten des Dokuments unter anderem Bisphenol A-Polycarbonat angegeben, das bevorzugt, aber keinesfalls notwendigerweise, auch ein sogenannter Nieder-Tg-Werkstoff sein kann, insbesondere dann, wenn auf die Polymerschichten eine Druckschicht aufgebracht werden soll. Als Nieder-Tg-Werkstoffe werden solche bezeichnet, die eine Glastemperatur von unterhalb von 140 °C aufweisen.

Aus EP 1 842 689 A2 ist eine thermisch stabile Identifikationskarte bekannt. Diese Karte ist aus einer Prälaminatlage aus äußeren Polyvinylchloridlagen und einer mittleren Polycarbonatlage und weiteren Polymerlagen gebildet. Die Polycarbonatlage trägt elektronische Komponenten.

Es hat sich gezeigt, dass der Ausschuss beim Laminieren von Dokumenten aus elektronische Bauelemente aufweisenden Polycarbonat-Folienlagen hoch ist, weil die elektrische Kontaktierung der Bauelemente mit den Anschlusskontakten von Leiterzugstrukturen im Dokument beim Laminieren ohne weiteres beeinträchtigt werden kann, d.h. dass die Kontakte beim Laminieren beschädigt werden können. Laminate mit derartigen Fehlern müssen zwangsläufig verworfen werden.

Von daher liegt der vorliegenden Erfindung die Aufgabe zugrunde, ein Dokument und ein Verfahren zu dessen Herstellung zu finden, bei dem die genannten Fehler nicht vorliegen und bei dem insbesondere vermieden wird, das zwischen einem elektronischen Bauelement und Anschlusskontakten einer elektrischen Leiterzugstruktur gebildete Kontaktverbindungen beim Laminieren beschädigt oder sogar zerstört werden.

Diese Aufgaben werden durch das Dokument gemäß Anspruch 1 und durch das Verfahren zum Herstellen des Dokuments gemäß Anspruch 9 gelöst. Bevorzugte Ausführungsformen und Weiterbildungen der Erfindung sind in den Unteransprüchen angegeben.

Gemäß einem ersten Aspekt betrifft die vorliegende Erfindung daher ein Dokument, insbesondere ein Wert- und/oder Sicherheitsdokument, das aus mehreren Folienlagen durch Laminieren erhalten ist und das eine elektrische Schaltung auf einer Trägerfolienlage enthält, die eine der Folienlagen des Dokuments bildet. Die elektrische Schaltung ist durch eine elektrische Leiterzugstruktur und mindestens ein mit der elektrischen Leiterzugstruktur elektrisch verbundenes elektronisches Bauelement gebildet. Die Trägerfolienlage mit der elektrischen Schaltung und mindestens zwei weitere Folienlagen sind übereinander angeordnet. Die Trägerfolienlage und die weiteren Folienlagen des Dokuments sind aus Polymermaterialien gebildet, von denen das Polymermaterial der Trägerfolienlage eine Glasübergangstemperatur T_{g,TF} aufweist, die um mindestens 20 °C höher ist als die Glasübergangstemperatur T_{g,DF} des Polymermaterials mindestens einer der weiteren Folien des Dokuments. Das Polymermaterial der Trägerfolienlage enthält Polycarbonat oder besteht aus Polycarbonat. Das Polymermaterial der weiteren Folienlagen des Dokuments enthält Polycarbonat oder besteht aus Polycarbonat.

Gemäß einem zweiten Aspekt betrifft die vorliegende Erfindung ferner ein Verfahren zum Herstellen des vorgenannten erfindungsgemäßen Dokuments. Das Verfahren umfasst die folgenden Verfahrensschritte in der nachfolgend angegebenen Reihenfolge, wobei aber zwischen den angegebenen Schritten zusätzlich weitere Verfahrensschritte durchgeführt werden können:
(a) Bereitstellen der elektrischen Schaltung auf der Trägerfolienlage, wobei die elektrische Schaltung durch die auf die Trägerfolienlage aufgebrachte elektrische Leiterzugstruktur und das mit der elektrischen Leiterzugstruktur elektrisch verbundene elektronische Bauelement gebildet ist;
(b) Zusammentragen der Trägerfolienlage der elektrischen Schaltung mit mindestens zwei weiteren Folienlagen zu einem Folienlagenstapel;
(c) Laminieren des Folienlagenstapels unter Einwirkung von erhöhtem Druck und erhöhter Temperatur unter Bildung des Dokuments.

In erfindungsgemäßer Art und Weise sind die Trägerfolienlage und die weiteren Folienlagen des Dokuments aus Polymermaterialien gebildet, von denen das Polymermaterial der Trägerfolienlage eine Glasübergangstemperatur T_{g,TF} aufweist, die um mindestens 20 °C höher ist als die Glasübergangstemperatur T_{g,DF} des Polymermaterials mindestens einer der weiteren Folien des Dokuments. Das Polymermaterial der Trägerfolienlage enthält Polycarbonat oder besteht aus Polycarbonat, und das Polymermaterial der weiteren Folienlagen enthält Polycarbonat oder besteht aus Polycarbonat. In einer bevorzugten Weiterbildung der vorliegenden Erfindung wird ein Polymermaterial für die Trägerfolienlage eingesetzt, das eine Glasübergangstemperatur T_{g,TF} hat, die um wenigstens 30 °C, noch besser um wenigstens 40 °C und noch weit besser um wenigstens 50 °C über der Glasübergangstemperatur T_{g,DF} mindestens einer der weiteren Folienlagen des Dokuments liegt.

Durch die Auswahl eines Polymermaterials für die Trägerfolienlage, das eine Glasübergangstemperatur T_{g,TF} hat, die um mindestens 20 °C über der Glasübergangstemperatur T_{g,DF} mindestens einer der weiteren Folienlagen, insbesondere aller weiteren Folienlagen in dem Dokument, liegt, kann das Dokument bei einer Laminiertemperatur T_{L} laminiert werden, die noch unterhalb der Glasübergangstemperatur T_{g,TF} des Polymermaterials der Trägerfolienlage oder zumindest im Bereich von dessen Glasübergangstemperatur T_{g,TF} (d.h. von unterhalb von T_{g,TF}, beispielsweise von maximal 40 °C unterhalb von T_{g,TF}, bis wenig über T_{g,TF}, beispielsweise bis maximal 10 °C über T_{g,TF}) liegt. Die Laminiertemperatur T_{L} sollte deutlich oberhalb der Glasübergangstemperatur T_{g,DF} der mindestens einen weiteren Folienlage des Dokuments liegen, d.h. mindestens 10 °C, besser mindestens 20 °C, noch besser mindestens 25 °C und am besten mindestens 30 °C oberhalb von T_{g,DF}, um ein ausreichendes Fließverhalten der Folienlagen zu erreichen, damit sich diese zu einem monolithischen Verbund gut miteinander verbinden. Indem die Trägerfolienlage einen Wert für T_{g,TF} aufweist, der um mindestens 20 °C über dem Wert für T_{g,DF} liegt, fließt die Trägerfolienlage beim Laminieren nicht oder zumindest nicht wesentlich. Damit bleibt auch das elektronische Bauelement beim Laminieren exakt an der Position, an der es ursprünglich platziert war, und wird dort stabilisiert, sodass keine Scherkräfte auf die Kontaktierungen des Bauelements mit den Anschlusskontakten der elektrischen Leiterzugstruktur auftreten. Derartige Scherkräfte könnten beim Laminieren insbesondere durch eine Ausgleichslage im Dokument verursacht werden, die auf der Seite der Trägerfolienlage angeordnet ist, auf der sich auch das elektronische Bauelement befindet, und die an der Stelle des Bauelements eine Aussparung oder Durchbrechung für das Bauelement aufweist, sodass das Bauelement in diese Aussparung oder Durchbrechung hineinragt. Bei herkömmlichen Aufbauten des Dokuments könnte sich die Ausgleichslage beim Laminieren daher gegenüber der Trägerfolienlage verschieben, da diese beiden Lagen zu fließen anfangen. Die Ausgleichsfolienlage würde dabei einen seitlichen Druck auf das elektronische Bauelement ausüben, sodass dieses ausweichen müsste und daher die elektrischen Kontaktverbindungen des Bauelements abreißen könnten. Indem zumindest die Trägerfolienlage aus einem Polymermaterial mit hohem T_{g,TF} hergestellt ist, werden diese und auch die Ausgleichsfolienlage auch dann noch positionsgenau gehalten, wenn das Folienmaterial bis auf die Laminiertemperatur T_{L} erhitzt und unter den Laminierdruck versetzt wird. Die Trägerfolienlage wirkt dadurch also als starrer Träger (gewissermaßen als Leiterplatte), der die Positionierung des elektronischen Bauelements stabilisiert. Die Trägerfolienlage verbindet sich während des Laminierens mit den weiteren Folienlagen stoffschlüssig, sodass sich ein monolithischer Verbund aller Folienlagen ergibt.

Es hat sich ferner überraschender Weise herausgestellt, dass eine Verwendung von Polymermaterial für die Ausgleichsfolienlage mit einer Glasübergangstemperatur, die noch niedriger liegt als die für die übrigen weiteren Folienlagen, also beispielsweise bei einem Wert unterhalb von etwa 150 °C (normalerweise gewählte Glasübergangstemperatur für die Folienlagen eines Dokuments), nicht die gewünschte Wirkung auf die Erhaltung der Kontakte des elektronischen Bauelements zur elektrischen Leiterzugstruktur hat. Ein Konzept, wonach die Fließfähigkeit der Ausgleichsfolienlage beim Laminieren dadurch erhöht würde, dass dessen Glasübergangstemperatur weiter erniedrigt wird, um auftretende Scherkräfte auf das Bauelement zu reduzieren oder sogar zu vermeiden, führt daher nicht zum Erfolg. Es hat sich nämlich herausgestellt, dass unter diesen Bedingungen alle Folienlagen schneller, d.h. bereits bei geringerer Temperatur, zu fließen anfangen, sodass das Bauelement verschoben wird.

Die Trägerfolienlage und die weiteren Folienlagen des Dokuments bestehen aus Polycarbonat (PC) oder enthalten PC. Beispielsweise bestehen sie aus PC/TPU/PC. Die Polymere der Trägerfolienlage und der weiteren Folienlagen des Dokuments können entweder gefüllt oder ungefüllt vorliegen. Im letzteren Falle sind sie vorzugsweise transparent oder transluzent. Falls die Polymere gefüllt sind, sind sie opak. Das Füllmaterial kann beispielsweise ein Pigment sein oder ein Füllmaterial, das eine besonders hohe oder eine besonders niedrige Dielektrizitätskonstante aufweist. Die einzelnen Folienlagen können unterschiedliche Füllstoffe enthalten, sodass sie transparent, transluzent oder opak sein und in verschiedener Art und Weise entweder eingefärbt oder nicht eingefärbt vorliegen können.

Bevorzugt bestehen die Trägerfolie und die weiteren Folien aus gleichen oder ähnlichen Polymeren. Unter ähnlichen Polymeren wird verstanden, dass die Polymere aus identischen und/oder ähnlichen Monomeren aufgebaut und somit chemisch vollständig sind oder wenigstens hochgradig ineinander mischbar sind, wobei sie sich aber beispielsweise ausschließlich durch den Vernetzungsgrad und somit durch den Anteil eines vernetzenden Monomers unterscheiden. Ferner können sie sich auch im Polymerisationsgrad unterscheiden. Hierdurch wird erreicht, dass ein stoffschlüssiger Verbund bei der Lamination erreicht wird, sodass verhindert werden kann, dass das Dokument zerstörungsfrei delaminiert werden kann. Somit wird eine Manipulation der elektrischen Schaltung, insbesondere eines Sicherheitschips sichergestellt.

Gemäß der vorliegenden Erfindung enthält das Polymermaterial der Trägerfolienlage Polycarbonat oder besteht aus diesem. Insbesondere kann das Polymermaterial ein Polycarbonat auf der Basis von Bis-(hydroxyaryl)-verbindungen, insbesondere Dihydroxydiphenylcycloalkanen, sein. Beispielsweise kann das Polymermaterial ein Polycarbonat auf der Basis von Bisphenol A (2,2-Bis-(4-hydroxyphenyl)-propan) oder eines von dessen Derivaten sein. Als Derivat kommt beispielsweise Bisphenol TMC (1,1-Bis-(4-hydroxyphenyl)-3,3,5-trimethylcyclohexan) in Betracht. Die Herstellung von derartigen Polycarbonaten ist beispielsweise in DE 10 2008 023 800 A1 angegeben. Weitere bevorzugte Bis-(hydroxyaryl)-verbindungen sind in DE 40 37 401 A1, DE 40 37 402 A1 und DE 10 2008 012 419 A1 angegeben. Insofern wird auf die dortigen Beschreibungen dieser Verbindungen und der weiteren Polymerisationskomponenten, -bedingungen und Zuschlagsstoffe verwiesen.

Somit enthält auch das Polymermaterial aller weiteren Folienlagen des Dokuments oder einer oder mehrerer weiterer Folienlagen gemäß der vorliegenden Erfindung Polycarbonat oder besteht aus Polycarbonat. Besonders bevorzugt ist es, wenn das Polymermaterial der weiteren Folienlagen des Dokuments ebenfalls ein Polycarbonat auf der Basis von Bis-(hydroxyaryl)-verbindungen, insbesondere von Bisphenol A, oder eines von deren Derivaten, insbesondere von Dihydroxydiphenylcycloalkanen, beispielsweise von Bisphenol TMC (1,1-Bis-(4-hydroxyphenyl)-3,3,5-trimethylcyclohexan), ist. Insoweit wird auf die Beschreibung zum Polymermaterial der Trägerfolienlage verwiesen.

Da das Polymermaterial der Trägerfolienlage Polycarbonat enthält oder aus Polycarbonat besteht, kann die Glasübergangstemperatur T_{g,DF} des Polymermaterials der weiteren Folienlagen des Dokuments bei knapp unter 150 °C, d.h. im Bereich von 145 °C bis 149 °C liegen. Die Glasübergangstemperatur T_{g,TF} des Polymermaterials der Trägerfolienlage kann in diesem Falle bei mindestens knapp 170 °C, d.h. beispielsweise bei 165 °C bis 169 °C, liegen, besser bei mindestens knapp 180 °C, d.h. beispielsweise bei 175 °C bis 179 °C, noch besser bei mindestens knapp 190 °C, d.h. beispielsweise bei 185 °C bis 189 °C, und am besten bei mindestens knapp 200 °C, d.h. beispielsweise bei 195 °C bis 199 °C. Falls die Glasübergangstemperatur T_{g,DF} des Polymermaterials der weiteren Folienlagen des Dokuments über oder unter dem oben genannten Wert von knapp 150 °C liegt, wäre die Glasübergangstemperatur T_{g,TF} des Polymermaterials der Trägerfolienlage entsprechend höher bzw. entsprechend niedriger zu wählen.

Die Glasübergangstemperaturen T_{g,TF} und T_{g,DF} der Trägerfolienlagen und der weiteren Folienlagen im Dokument können zum einen durch den Vernetzungsgrad des Polymers und zum anderen durch weitere Stoffe, die mit dem Polymermaterial vermischt sind, beeinflusst werden. Um den Vernetzungsgrad zu beeinflussen, kann die Polymerisationsreaktion gezielt geführt werden. Beispielsweise kann die Molekulargewichtsverteilung von Polycarbonat gemäß DE 10 2008 023 800 A1 und DE 10 2008 008 842 A1 gezielt eingestellt werden, wenn bei der Polymerisationsreaktion hierfür ein Alkylphenol, beispielsweise p-tert. Butylphenol, als Kettenabbrecher, d.h. als Endgruppe, verwendet wird. Gemäß diesen Dokumenten wird durch Verwendung von Alkylphenolen bei der Polymerisation von Diphenolen, beispielsweise 2,2-Bis-(4-hydroxyphenyl)-propan (Bisphenol A), mit Kohlensäurederivaten, beispielsweise Phosgen, und Verzweigern unter anderem eine verbesserte Wärmeformbeständigkeit (mit erhöhter Glasübergangstemperatur) erzielt. Auch der Einsatz von Füllstoffen, beispielsweise Pigmenten, in dem Polymermaterial verändert, vorzugsweise erhöht, die Glasübergangstemperatur.

In einer weiteren bevorzugten Weiterbildung der vorliegenden Erfindung ist das ungehäuste Bauelement, beispielsweise ein Halbleiterschaltkreiselement, in Flip-Chip-Technik montiert, d.h. kopfüber mit den Kontaktstellen nach unten weisend platziert, mechanisch fixiert und elektrisch kontaktiert. Zur Montage des Schaltkreiselements ist dieses mit Kontakthöckern, beispielsweise aus Kupfer/Nickel/Gold, ausgerüstet, die dessen Kontaktstellen zum Anschluss an Anschlusskontakte der Leiterzugstruktur darstellen. Die Kontakthöcker stehen über die Anschlussseite des Schaltkreiselements hinaus, sodass sie auf die Anschlusskontakte der Leiterzugstruktur aufgesetzt werden können. Damit wird eine sehr geringe Bauhöhe erreicht, die die Erfüllung der Anforderungen für die Integration eines derartigen elektronischen Bauelements in ein Wert- und/oder Sicherheitsdokument in Kartenform ermöglicht.

In einer weiteren bevorzugten Weiterbildung der vorliegenden Erfindung sind die elektrische Leiterzugstruktur durch eine Antennenstruktur und das elektronische Bauelement durch einen vorzugsweise ungehäusten Transponderchip gebildet. Die elektrische Schaltung bildet somit eine Transpondereinheit. Das Halbleiterschaltkreiselement (elektronischer Chip) bildet in diesem Falle daher zusammen mit der Antenne einen Transponder, der zur kontaktlosen Datenübertragung durch induktive Einkopplung von Energie von einem Schreib-/Lese- oder Lesegerät geeignet ist. Das Halbleiterschaltkreiselement und die Antenne sind in diesem Falle elektrisch miteinander verbunden, d.h. jeweils ein Ende der beispielsweise spiralförmigen Antenne ist mit einer der Kontaktstellen des Halbleiterschaltkreiselements verbunden. Das Halbleiterschaltkreiselement kann in Form eines gehäusten oder eines ungehäusten Bauelements vorliegen. In letzterem Falle kann das Halbleiterschaltkreiselement insbesondere in Flip-Chip-Technik mit seinen insbesondere in Form von Kontakthöckern ausgebildeten Kontaktstellen kopfüber auf die Anschlusskontakte der Antenne aufgesetzt und dort kontaktiert sein. Das elektronische Bauelement, insbesondere Halbleiterschaltkreiselement, kann in diesem Falle insbesondere derart auf den Strang von Antennenwindungen aufgesetzt sein, dass es diese überbrückt. Dadurch ist jeweils eine Kontaktstelle des Bauelements an den beiden Seiten des Stranges angeordnet und dort mit jeweils einem der beiden Enden der Antenne kontaktiert. Hierzu befindet sich die Antenne ebenso wie das Bauelement auf einer Montageseite der Trägerfolienlage und damit in derselben Ebene wie das Bauelement.

Der Transponderchip und die Antennenstruktur sind vorzugsweise parallel zur Vorder- und

Rückseite des Wert- und/oder Sicherheitsdokuments angeordnet, in das die kontaktlose Transpondereinheit integriert ist. Zusätzlich zur Trägerfolienlage kann ferner eine Ausgleichsfolienlage vorgesehen werden, die auf der Seite der Trägerfolienlage angeordnet ist, auf der sich auch der Transponderchip befindet, und die eine Aussparung zur Aufnahme des Transponderchips aufweist, deren Größe der Größe des Chips entspricht. Die Dicke der Ausgleichslage entspricht vorzugsweise ungefähr der Montagehöhe des Transponderchips. Dadurch entsteht im fertigen Laminat eine ebene Dokumentenoberfläche.

Der Transponderchip kann insbesondere einen für eine kontaktlose Datenübermittlung ausgelegten Prozessor und einen elektronischen Speicher aufweisen. Es kann sich insbesondere um ein gedünntes Halbleiterschaltkreiselement handeln. Darunter ist ein integrierter Schaltkreis zu verstehen, der eine Dicke von höchstens 200 µm, bevorzugt höchstens 100 µm, weiter bevorzugt von höchstens 80 µm und am meisten bevorzugt von höchstens 60 µm aufweist. Weiter weist dieser integrierte Schaltkreis eine Dicke von wenigstens 1 µm, bevorzugt von wenigstens 10 µm, weiter bevorzugt von wenigstens 15 µm, weiter bevorzugt von wenigstens 20 µm und am meisten bevorzugt von wenigstens 25 µm auf. Der Transponderchip ist vorzugsweise ein ungehäustes Halbleiterschaltkreiselement. Damit ist eine besonders einfache und damit kostengünstige Herstellung des Dokuments gewährleistet. Insbesondere wenn das ungehäuste Halbleiterschaltkreiselement gedünnt ist, kann eine sehr geringe Bauhöhe erreicht werden, sodass das mit diesem Bauelement hergestellte Dokument auch normgerecht, d.h. beispielsweise gemäß ISO 7813 (Dicke von ID 1-Karten von 0,76 mm), herstellbar ist.

In einer weiteren bevorzugten Weiterbildung der vorliegenden Erfindung ist die elektrische Leiterzugstruktur eine Antennenstruktur, die mit dem ungehäusten Halbleiterschaltkreiselement elektrisch verbunden ist. Die Antennenstruktur kann in einer bevorzugten Ausführungsvariante durch eine Antennenleiterbahn gebildet sein, die wie eine Spule in Form von Antennenwindungen spiralförmig beispielsweise in einem Randbereich der Trägerfolienlage und in einer Ebene auf der Trägerfolienlage verläuft. Die Antennenwindungen können beispielsweise in engem Abstand voneinander und insbesondere parallel zueinander verlaufen. Die Antennenwindungen können demnach einen Strang ausbilden, der die Antennenwindungen enthält und der beispielsweise entlang den Rändern der Trägerfolienlage verläuft. Durch die Parallelführung der Antennenwindungen in einer Ebene bildet die Antennenstruktur zwei Enden aus, die auch Anschlusskontakte für das Halbleiterschaltkreiselement darstellen. Diese Enden können sich beispielsweise in gleicher Höhe auf jeweils einer Seite des Stranges befinden. Typischerweise beträgt die Breite der Antennenleiterzüge der Antennenstruktur 100 µm bis 2 mm. Die Breite kann aber grundsätzlich auch geringer sein, beispielsweise 50 µm bis 500 µm.

In einer weiteren bevorzugten Weiterbildung der vorliegenden Erfindung ist die elektrische Leiterzugstruktur durch Aufdrucken einer Leitpaste oder eines Leitlackes auf die Trägerfolienlage gebildet. Die Leitpaste oder der Leitlack enthält mindestens ein Polymer als Binder sowie mindestens ein Metall und/oder ein leitfähiges Metalloxid und/oder ein anderes leitfähiges Material in dem Polymer. Als leitfähiges Material kommen Kupfer, Silber, Gold, Eisen, Zink, Zinn und/oder Kohlenstoff, insbesondere Graphit, Singlewall- und/oder Multiwall-Nanotubes, Fullerene oder Graphene, in Betracht. Als Metalloxide kommen ITO (Indium-Zinn-Oxid), IZO, FTO (Fluor-dotiertes Zinndioxid), ATO (Antimonoxid) in Betracht. Die Metalle/Metalloxide können in Form von Flakes, Nadeln, Pulver (insbesondere nanoskalig), Plättchen oder dergleichen vorliegen. Insbesondere liegen diese als aggregierte Partikel vor. Als ein anderes leitfähiges Material kommen leitfähige organische Materialien/Polymere, z.B. Polyanilin, PEDOT:PSS, in Betracht. Zur Erzeugung der Leiterzugstruktur mit der Leitpaste oder dem Leitlack kann eine Siebdrucktechnik eingesetzt werden, beispielsweise ein Bogendruckverfahren, oder ein Rolle-Rolle-Druckverfahren. Die Dicke der aufgedruckten Paste oder des Lacks kann nach der Härtung insbesondere 1 µm bis 100 µm und besonders bevorzugt etwa 10 µm betragen. Zum Härten kann die Leitpaste oder der Leitlack entweder einfach getrocknet werden oder mittels Wärme und/oder Bestrahlung mit elektromagnetischer Strahlung, beispielsweise UV-Strahlung, ausgehärtet werden. Die Herstellung der elektrischen Leiterzugstruktur mit einer Leitpaste oder einem Leitlack ist einfach und damit kostengünstig. Besonders vorteilhaft ist es, wenn die Leitpaste eine Silberpartikel als elektrisch leitfähige Substanz enthaltende Zusammensetzung ist.

Zur Herstellung eines erfindungsgemäßen Dokuments, vorzugsweise eines Wert- und/oder Sicherheitsdokuments werden die elektrische Schaltung bzw. die Transpondereinheit (Leiterzugstruktur bzw. Antennenstruktur und ein damit elektrisch in Verbindung stehendes elektronisches Bauelement bzw. ein Transponderchip) auf der Trägerfolienlage sowie weitere Folienlagen zu einem Folienlagenstapel zusammengetragen. Beispielsweise können weitere Folienlagen in den Folienlagenstapel integriert werden, die zusätzliche Sicherheitsmerkmale enthalten, beispielsweise ein Lichtbild des Inhabers des Dokuments. Der Stapel kann ferner durch Deckfolienlagen (Overlays) nach oben und/oder unten abgeschlossen werden. Diese Deckfolienlagen sind vorzugsweise transparent und erlauben dadurch die Ansicht darunter liegender Folienlagen. Die Overlays schützen die darunter angeordneten Folienlagen. Um ein Wert- und/oder Sicherheitsdokument zu bilden, können die Trägerfolienlage und die weiteren Folienlagen beispielsweise zusätzliche Sicherheitsmerkmale aufweisen. Zum Zusammentragen können übliche Vorrichtungen verwendet werden, die auch zum Zusammentragen von Bögen in der Drucktechnik verwendet werden. Die Folienlagen können nach dem Zusammentragen, aber vor dem Laminieren, geheftet werden, beispielsweise durch lokales Verschweißen, beispielsweise punktförmiges Verschweißen, um die Folienlagen gegeneinander zu fixieren.

Anschließend werden die Folienlagen des Stapels zusammenlaminiert. Beim Laminieren wird der Stapel in einer Heißpresse beispielsweise bei 190 °C bis 200 °C und einem Druck von 350 N/cm² sowie in einer Kühlpresse bei einem Druck von 600 N/cm² laminiert, insbesondere wenn die Folienlagen aus PC hergestellt sind. Nach der Fertigstellung des Laminats kann das Dokument mit weiteren Sicherheitsmerkmalen ausgerüstet werden. Jedenfalls wird der Folienlagenstapel beim Laminieren einem erhöhten Druck und einer erhöhten Temperatur unterworfen. Unter einer erhöhten Temperatur und einem erhöhten Druck sind jeweilige Parameter gegenüber Raumtemperatur und Normaldruck zu verstehen. Die Temperatur muss so hoch sein, dass zumindest ein wesentlicher Teil des zu laminierenden Folienlagenstapels zu fließen beginnt und die Folienlagen sich miteinander verbinden, damit sich ein monolithischer Verbund der Folienlagen bildet. Der Druck muss außerdem so hoch sein, dass eventuelle Lufteinschlüsse sicher ausgetrieben werden und die Folienlagen somit in einen innigen Kontakt miteinander gebracht werden.

Das Wert- und/oder Sicherheitsdokument kann beispielsweise ein Personalausweis, Reisepass, Zugangsausweis, Führerschein, Fahrzeugbrief, Fahrzeugschein, Firmenausweis, Skipass, ein sonstiger Berechtigungsausweis, ein Ticket im öffentlichen Personen-Nahverkehr, eine Banknote, Kreditkarte, Scheckkarte, Barzahlungskarte, Eintrittskarte, Identifikationskarte, ein Visum oder dergleichen sein. Das Dokument kann in Form einer Karte mit einer Vorderseite und einer Rückseite vorliegen oder als buchartiges Dokument ausgebildet sein, beispielsweise im ID 1-, ID 2- oder ID 3-Format gemäß ISO 7810. Es kann im Wesentlichen aus Papier oder auch aus Kunststoff hergestellt sein. Im Falle eines Personalausweises trägt dessen Vorderseite zum Beispiel das Lichtbild sowie den Namen des Inhabers. Die Rückseite kann weitere Angaben enthalten, beispielsweise die Anschrift des Inhabers. Außerdem kann das Dokument weitere Sicherheitsmerkmale aufweisen. Das Dokument kann als Transponder, insbesondere als passiver Transponder, beispielsweise als RFID-Sicherheitsdokument, ausgebildet sein.

Die vorliegende Erfindung wird nachfolgend an Hand von Figuren exemplarisch erläutert.

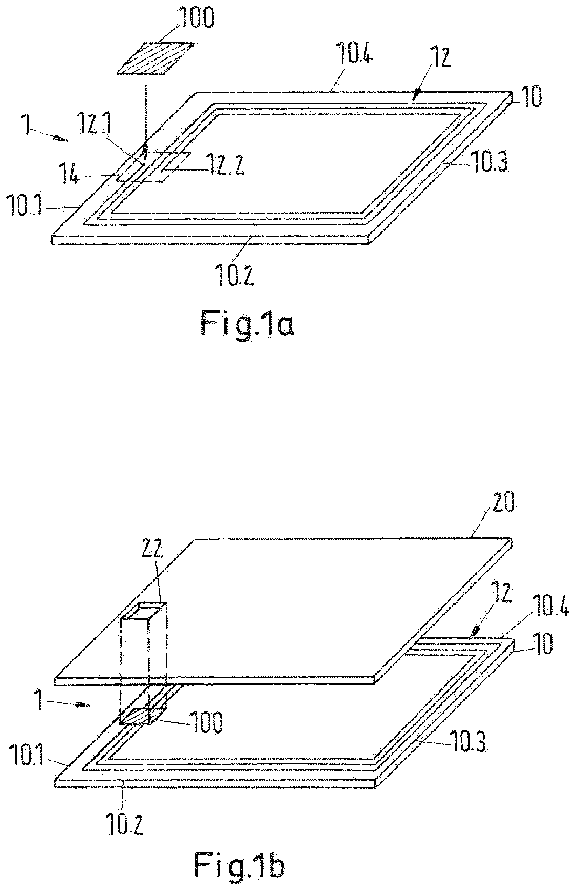

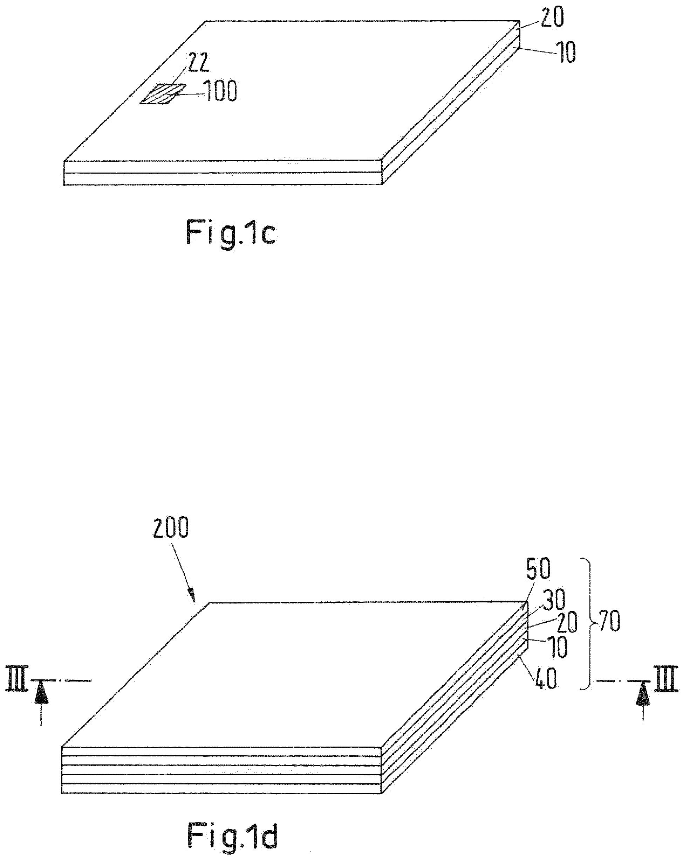

- Fig. 1: zeigt in mehreren perspektivischen schematischen Ansichten die Verfahrensschritte zur Herstellung eines Folienlagenstapels; (a) Bereitstellen der Trägerfolienlage mit einer darauf gebildeten Antennenstruktur und Montieren eines Chips darauf zur Herstellung einer Transpondereinheit; (b) Bereitstellen einer weiteren Folienlage (Ausgleichsfolienlage); (c) Zusammentragen der Trägerfolienlage und der Ausgleichsfolienlage; (d) Zusammentragen des in Verfahrensschritt (c) erhaltenen Stapels mit einer Abschlussfolienlage und äußeren Deckfolienlagen;

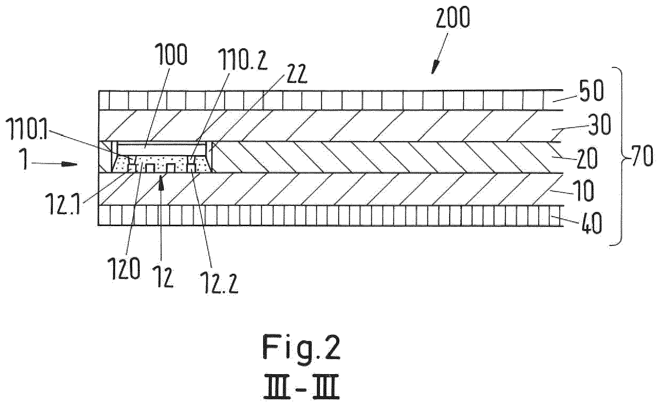

- Fig. 2: zeigt das erfindungsgemäße Dokument in einem Schnitt III - III gemäß Fig. 1d in einer schematischen Darstellung.

In den Figuren bezeichnen gleiche Bezugsziffern gleiche Elemente sowie Elemente mit gleicher Funktion.

Die in Fig. 1 dargestellten Herstellphasen zeigen in nacheinander durchgeführten Verfahrensschritten gemäß dem erfindungsgemäßen Verfahren zum Herstellen des Dokuments perspektivisch und schematisch eine Trägerfolienlage 10 mit einer Antennenstruktur 12 und einem Transponderchip 100 (elektronisches Bauelement), eine weitere Folienlage 20, die als Ausgleichsfolienlage für den Transponderchip 100 dient, eine Abschlussfolienlage 30 sowie äußere Deckfolienlagen 40, 50. Diese Folien bilden zusammen einen Folienlagenstapel 70.

Die Trägerfolienlage 10 und die Ausgleichsfolienlage 20 können beispielsweise Folienabschnitte mit den Maßen einer Karte mit den Abmessungen gemäß ISO 7810, beispielsweise im Kartenformat ID-1, sein. Anstelle der in der Darstellung in Fig. 1 gezeigten Kartenbögen können zunächst auch Folienbögen mit mehreren Nutzen vorliegen, die deutlich größer sind als den vorgenannten Abmessungen entspricht, sodass beispielsweise 5 x 8 derartige Folienabschnitte im Kartenformat ID-1 auf einem Bogen untergebracht sind. Derartige Mehrfachnutzen-Bögen werden mit entsprechenden weiteren Folienbögen zusammengetragen, -geheftet und -laminiert, sodass nach dem Laminieren ein Mehrfachnutzen-Stapel und -Laminat erhalten wird, aus dem die Einzelnutzen, beispielsweise die Karten im Format ID-1, vereinzelt werden, beispielsweise durch Ausstanzen.

Die Trägerfolienlage 10 ist vorzugsweise aus PC hergestellt und hat eine Glasübergangstemperatur T_{g,TF} von etwa 200 °C (Vicaterweichungstemperatur von 205° C). Durch geeignete Füllstoffe kann die Trägerfolienlage 10 opak weiß sein. Ihre Dicke kann beispielsweise 100 µm betragen. Gleichermaßen kann auch die Ausgleichsfolienlage 20 aus PC hergestellt und mit geeigneten Füllstoffen weiß opak sein. Deren Dicke kann 150 µm betragen. Die Ausgleichsfolienlage 20 ist ebenfalls vorzugsweise aus PC hergestellt. Allerdings ist deren Glasübergangstemperatur T_{g,DF} geringer als die der Trägerfolienlage 10. Sie beträgt beispielsweise etwa 150 °C.

Auf der Trägerfolienlage 10 ist eine Antennenstruktur 12 aufgebracht, die aus einem spiralförmig gewundenen Antennenleiterzug mit mehreren Spiralwindungen besteht. Die einzelnen Spiralwindungen verlaufen jeweils in einem Abstand von beispielsweise etwa 200 µm voneinander und parallel zueinander auf der Trägerfolienlage 10. Im Montagebereich 14 endet der Antennenleiterzug. Dort befinden sich seine zwei Enden 12.1, 12.2, die auch die Anschlusskontakte zu einem Halbleiterschaltkreiselement 100 bilden. Die Antennenstruktur 12 windet sich parallel zu den vier Rändern 10.1, 10.2, 10.3, 10.4 der Trägerfolienlage 10 und in geringem Anstand zu diesen. Der Antennenleiterzug der Antennenstruktur 12 kann beispielsweise mit einer Leitpaste oder einem Leitlack durch Siebdrucken erzeugt sein. Hierzu kann beispielsweise eine Leitpaste oder ein Leitlack mit Silberpartikeln verwendet werden. Der Antennenleiterzug kann beispielsweise eine Breite von ca. 400 µm aufweisen.

Zunächst wird als elektronisches Bauelement ein Halbleiterschaltkreiselement, im vorliegenden Falle ein Transponderchip 100, in dem Montagebereich 14 auf die Trägerfolienlage 10 aufgesetzt und mit den Enden 12.1, 12.2 des Antennenleiterzuges der Antennenstruktur 12 elektrisch in Kontakt gebracht (Fig. 1a). Damit wird der Chip 100 auf der Montageseite der Trägerfolienlage 10 montiert. Der Chip 100 wird in Flip-Chip-Technik im Montagebereich 14 montiert, d.h. am Chip 100 befindliche Kontaktstellen in Form von Kontakthöckern 110.1, 110.2 (Fig. 2) werden nach unten weisend auf die Enden 12.1, 12.2 des Antennenleiterzuges aufgesetzt, aufgeklebt und dort kontaktiert. Damit überbrückt der Chip 100 den durch den Antennenleiterzug gebildeten Strang aus spiralförmigen und parallel zueinander angeordneten Windungen der Antennenstruktur 12. Zur Chipmontage kann beispielsweise ein anisotroper Leitkleber 120 eingesetzt werden, der den zwischen den Kontakthöckern 110.1, 110.2 befindlichen Raum zwischen dem Chip 100 und der Oberseite der Trägerfolienlage 10 im Montagebereich 14 ausfüllt und dabei den Chip mit der Trägerfolienlage verklebt (Fig. 2). Gleichzeitig vermittelt dieser Leitkleber 120 einen elektrischen Kontakt zwischen den Kontakthöckern 110.1, 110.2 des Chips 100 und den Enden 12.1, 12.2 des Antennenleiterzuges, ohne jedoch einen elektrischen Kontakt zwischen den Anschlusskontakten untereinander und zwischen den Kontakthöckern des Chips untereinander herzustellen. Der Transponderchip 100 weist unter anderem einen für eine kontaktlose Datenübermittlung geeigneten Prozessor und einen elektronischen Speicher auf.

Die Antennenstruktur 12 und der auf der Antennenstruktur fixierte und elektrisch kontaktierte Transponderchip 100 bilden zusammen eine elektrische Schaltung 1, hier eine Transpondereinheit, die auf der Trägerfolienlage 10 angeordnet ist.

Nach der Chipmontage im Montagebereich 14 der Trägerfolienlage 10 wird eine weitere Folienlage in Form der Ausgleichsfolienlage 20 auf der Montageseite der Trägerfolienlage 10 bereitgestellt (Fig. 1 b). Die Ausgleichsfolienlage 20 weist eine Durchbrechung 22 auf, die sich an der Stelle befindet, an der sich auch der Chip 100 auf der Trägerfolienlage 10 befindet. Die Durchbrechung 22 hat ferner die Form des Chips 100 und ist etwa ebenso groß wie dieser. Außerdem hat die Ausgleichsfolienlage 20 ungefähr eine der Montagehöhe des Chips 100 entsprechende Dicke, sodass die Oberseite des Chips nach dem Auflegen der Ausgleichsfolienlage 20 auf die Trägerfolienlage 10 mit der Oberseite der Ausgleichsfolienlage eine im Wesentlichen fluchtende Fläche ausbildet. Der Chip 100 füllt daher die Durchbrechung 22 etwa vollständig aus.

Nach dem Bereitstellen dieser weiteren Folienlage (Ausgleichsfolienlage) 20 (Fig. 1 b) werden die Trägerfolienlage 10 mit dem darauf montierten Transponderchip 100 und die weitere Folienlage (Ausgleichsfolienlage) 20 zusammengetragen (Fig. 1c).

In einer alternativen Ausführungsform des Herstellverfahrens können die Trägerfolienlage 10 und die Ausgleichsfolienlage 20 auch zunächst zusammengetragen werden und der Transponderchip 100 danach in der Durchbrechung 22 montiert werden.

Anschließend wird eine weitere Folienlage, die Abschlussfolienlage 30 aufgelegt, die den Stapel aus Trägerfolienlage 10 und Ausgleichsfolienlage 20 nach oben hin abschließt und somit auch die Durchbrechung 22 verschließt (Fig. 1d). Die Abschlussfolienlage 30 ist ebenfalls vorzugsweise aus PC hergestellt. Das Polymermaterial der Abschlussfolienlage 30 kann dasselbe sein wie das der Ausgleichsfolienlage 20. Daher ist deren Glasübergangstemperatur T_{g,DF} genauso groß, nämlich etwa 150 °C, wie die der Ausgleichsfolienlage 30. Auch die Abschlussfolienlage 30 kann durch Füllstoffe weiß opak sein, sodass der Transponderchip 100 und die Antennenstruktur 12 von außen nicht mehr sichtbar sind.

Danach werden auf die beiden Außenseiten des so gebildeten Folienstapels aus Trägerfolienlage 10, Ausgleichsfolienlage 20 und Abschlussfolienlage 30 jeweils eine Deckfolienlage 40, 50 aufgelegt, die transparent sind und darunter liegende Strukturen erkennbar lassen (Fig. 1d). Die Deckfolienlagen 40, 50 sind ebenso wie die anderen Folienlagen vorzugsweise aus PC hergestellt. Das Polymermaterial der Deckfolienlagen 40, 50 kann dasselbe sein wie das der Ausgleichsfolienlage 20 und der Abschlussfolienlage 30. Daher ist deren Glasübergangstemperatur T_{g,DF} genauso groß, nämlich etwa 150 °C, wie die dieser Folienlagen. Beispielsweise kann die Abschlussfolienlage 30 mit einem Lichtbild des Inhabers des Dokuments 200 (in Fig. 1d noch nicht fertig, da noch nicht laminiert) versehen sein, das durch die darüber liegende transparente Deckfolienlage 50 sichtbar ist.

Ein Schnitt entlang III - III durch den Stapel 70 des Dokuments 200 ist in Fig. 2 dargestellt. Erkennbar sind die Trägerfolienlage 10 mit der darauf aufgebrachten Antennenstruktur 12 mit den Anschlusskontakten 12.1, 12.2 und dem auf diesen kontaktierten Transponderchip 100. Dieser weist Kontakthöcker 110.1, 110.2 auf, die auf den Anschlusskontakten 12.1, 12.2 aufsitzen. Der Chip 100 ist mittels eines anisotropen Leitklebers 120 auf der Trägerfolienlage 10 mechanisch und elektrisch montiert. Ferner ist die Ausgleichsfolienlage 20 mit der Durchbrechung 22 zu erkennen, in die der Chip 100 hineinragt. Auf der Ausgleichsfolienlage 20 befindet sich die Abschlussfolienlage 30. Dieser Stapel ist von den beiden weiteren transparenten Deckfolienlagen 40, 50 beidseitig abgeschlossen. Die Folienlagen 10, 20, 30, 40, 50 bilden zusammen den Folienlagenstapel 70.

Zum Abschluss wird der Stapel laminiert, d.h. in einer Laminierpresse, beispielsweise einer kontinuierlichen Laminierpresse, unter erhöhtem Druck und unter Einwirkung erhöhter Temperatur zusammenlaminiert. Hierzu wird der Stapel in einer Heißpresse einer Laminiertemperatur T_{L} von 180 bis 190 °C und einem Druck von 350 N/cm² sowie in einer Kühlpresse bei einem Druck von 600 N/cm² ausgesetzt. Da die Laminiertemperatur T_{L} deutlich höher ist als T_{g,DF}, aber niedriger ist als T_{g,TF}, fließen die Polymermaterialien der Ausgleichsfolienlage 20, der Abschlussfolienlage 30 sowie der Deckfolienlagen 40, 50, nicht jedoch das Polymermaterial der Trägerfolienlage 10. Dadurch wird der Transponderchip 100 auf der Antennenstruktur 12 stabilisiert, sodass die Kontaktierung des Chips beim Laminieren nicht beeinträchtigt wird. Durch das Laminieren wird ein monolithischer Verbund erzeugt, der das Dokument 200 ergibt.

Nach der Fertigstellung des Laminats kann das Dokument 200 mit weiteren Sicherheitsmerkmalen ausgerüstet werden.

## Patentansprüche

1. Dokument (200), das aus mehreren Folienlagen (10, 20, 30, 40, 50) durch Laminieren erhalten ist und das eine elektrische Schaltung (1) auf einer eine der Folienlagen (10, 20, 30, 40, 50) des Dokuments (200) bildenden Trägerfolienlage (10) enthält, wobei die elektrische Schaltung (1) durch eine elektrische Leiterzugstruktur (12) und mindestens ein mit der elektrischen Leiterzugstruktur (12) elektrisch verbundenes elektronisches Bauelement (100) gebildet ist, wobei die Trägerfolienlage (10) mit der elektrischen Schaltung (1) und mindestens zwei weitere Folienlagen (20, 30, 40, 50) übereinander angeordnet sind, wobei die Trägerfolienlage (10) und die weiteren Folienlagen (20, 30, 40, 50) des Dokuments (200) aus Polymermaterialien gebildet sind, von denen das Polymermaterial der Trägerfolienlage (10) eine Glasübergangstemperatur T_{g,TF} aufweist, die um mindestens 20 °C höher ist als die Glasübergangstemperatur T_{g,DF} des Polymermaterials mindestens einer der weiteren Folien (20, 30, 40, 50) des Dokuments (200), **dadurch gekennzeichnet, dass** das Polymermaterial der Trägerfolienlage (10) Polycarbonat enthält oder aus Polycarbonat besteht und dass das Polymermaterial der weiteren Folienlagen (20, 30, 40, 50) des Dokuments (200) Polycarbonat enthält oder aus Polycarbonat besteht.

2. Dokument (200) nach Anspruch 1, **dadurch gekennzeichnet, dass** das Polymermaterial der Trägerfolienlage (10) ein Polycarbonat auf der Basis von Bisphenol A oder eines von dessen Derivaten ist.

3. Dokument (200) nach einem der vorstehenden Ansprüche, **dadurch gekennzeichnet, dass** das Polymermaterial der weiteren Folienlagen (20, 30, 40, 50) des Dokuments (200) ein Polycarbonat auf der Basis von Bisphenol A oder eines von dessen Derivaten ist.

4. Dokument (200) nach einem der vorstehenden Ansprüche, **dadurch gekennzeichnet, dass** die elektrische Leiterzugstruktur (12) durch eine Antennenstruktur und das elektronische Bauelement (100) durch einen Transponderchip gebildet sind, sodass die elektrische Schaltung (1) eine Transpondereinheit bildet.

5. Dokument (200) nach Anspruch 4, **dadurch gekennzeichnet, dass** der Transponderchip (100) ein ungehäustes Halbleiterschaltkreiselement ist.

6. Dokument (200) nach einem der Ansprüche 4 und 5, **dadurch gekennzeichnet, dass** der Transponderchip (100) in Flip-Chip-Technik montiert ist.

7. Dokument (200) nach einem der vorstehenden Ansprüche, **dadurch gekennzeichnet, dass** die elektrische Leiterzugstruktur (12) durch Aufdrucken einer Leitpaste oder eines Lackes auf die Trägerfolienlage (10) gebildet ist.

8. Dokument (200) nach einem der vorstehenden Ansprüche, **dadurch gekennzeichnet, dass** das Dokument (200) ein Wert- und/oder Sicherheitsdokument ist.

9. Verfahren zum Herstellen des Dokuments (200) nach einem der Ansprüche 1 bis 8, umfassend die folgenden Verfahrensschritte:
(a) Bereitstellen einer elektrischen Schaltung (1) auf einer Trägerfolienlage (10), wobei die elektrische Schaltung (1) durch eine auf die Trägerfolienlage (10) aufgebrachte elektrische Leiterzugstruktur (12) und ein mit der elektrischen Leiterzugstruktur (12) elektrisch verbundenes elektronisches Bauelement (100) gebildet ist;
(b) Zusammentragen der Trägerfolienlage (10) für die elektrische Schaltung (1) mit mindestens zwei weiteren Folienlagen (20, 30, 40, 50) zu einem Folienlagenstapel (70);
(c) Laminieren des Folienlagenstapels (70) unter Einwirkung von erhöhtem Druck und erhöhter Temperatur unter Bildung des Dokuments (200);
wobei die Trägerfolienlage (10) und die weiteren Folienlagen (20, 30, 40, 50) des Dokuments (200) aus Polymermaterialien gebildet sind, von denen das Polymermaterial der Trägerfolienlage (10) eine Glasübergangstemperatur T_{g,TF} aufweist, die um mindestens 20 °C höher ist als die Glasübergangstemperatur T_{g,DF} des Polymermaterials mindestens einer der weiteren Folien (20, 30, 40, 50) des Dokuments (200),
**dadurch gekennzeichnet, dass** das Polymermaterial der Trägerfolienlage (10) Polycarbonat enthält oder aus Polycarbonat besteht und dass das Polymermaterial der weiteren Folienlagen (20, 30, 40, 50) des Dokuments (200) Polycarbonat enthält oder aus Polycarbonat besteht.

## Claims

1. Document (200) obtainable from multiple film layers (10, 20, 30, 40, 50) by means of a laminating process and which contains an electric circuit (1) on a carrier film layer (10) that forms one of the film layers (10, 20, 30, 40, 50) of the document (200), wherein the electric circuit (1) is formed by an electric circuit path structure (12) and at least one electronic component (100) electrically connected to the electric circuit path structure (12), wherein the carrier film layer (10) together with the electric circuit (1) and at least two other film layers (20, 30, 40, 50) are arranged one above the other, wherein the carrier film layer (10) and the other film layers (20, 30, 40, 50) of the document (200) are formed from polymer materials, of which the polymer material of the carrier film layer (10) has a glass-transition temperature T_{g.TF} which is at least 20 ºC higher than the glass-transition temperature T_{g.DF} of the polymer material of at least one of the other films (20, 30, 40, 50) of the document (200), **characterized in that** the polymer material of the carrier film layer (10) contains polycarbonate or consists of polycarbonate, and that the polymer material of the other film layers (20, 30, 40, 50) of the document (200) contains polycarbonate or consists of polycarbonate.

2. Document (200) according to claim 1, **characterised in that** the polymer material of the carrier film layer (10) is a polycarbonate on the basis of bisphenol A or one of its derivatives.

3. Document (200) according to any one of the preceding claims, **characterised in that** the polymer material of the other film layers (20, 30, 40, 50) of the document (200) is a polycarbonate on the basis of bisphenol A or one of its derivatives.

4. Document (200) according to any one of the preceding claims, **characterised in that** the electric circuit path structure (12) is formed by an antenna structure, and the electronic component (100) is formed by a transponder chip, such that the electric circuit (1) forms a transponder unit.

5. Document (200) according to claim 4, **characterised in that** the transponder chip (100) is an unhoused semiconductor circuit element.

6. Document (200) according to any one of claims 4 and 5, **characterised in that** the transponder chip (100) is mounted in the flip-chip technique.

7. Document (200) according to any one of the preceding claims, **characterised in that** the electric circuit path structure (12) is formed by imprinting a conductive paste or a lacquer onto the carrier film layer (10).

8. Document (200) according to any one of the preceding claims, **characterised in that** the document (200) is a value and/or security document.

9. Method for producing the document (200) according to any one of claims 1 to 8, comprising the following method steps:
(a) providing an electric circuit (1) on a carrier film layer (10), wherein the electric circuit (1) is formed by an electric circuit path structure (12) applied onto the carrier film layer (10) and an electronic component (100) electrically connected to the electric circuit path structure (12);
(b) assembling the carrier film layer (10) for the electric circuit (1) with at least two further film layers (20, 30, 40, 50) to form a film layer stack (70);
(c) laminating the film layer stack (70) under the effect of increased pressure and increased temperature, thereby forming the document (200);
wherein the carrier film layer (10) and the further film layers (20, 30, 40, 50) of the document (200) are formed from polymer materials, of which the polymer material of the carrier film layer (10) has a glass-transition temperature T_{g.TF} which is at least 20 ºC higher than the glass-transition temperature T_{g.DF} of the polymer material of at least one of the other films (20, 30, 40, 50) of the document (200),
**characterised in that** the polymer material of the carrier film layer (10) contains polycarbonate or consists of polycarbonate, and that the polymer material of the other film layers (20,30, 40, 50) of the document (200) contains polycarbonate or consists of polycarbonate.

## Revendications

1. Document (200), qui est obtenu à partir de plusieurs couches de film (10, 20, 30, 40, 50) par laminage et qui contient un circuit électrique (1) sur une couche de film de support (10) formant une des couches de film (10, 20, 30, 40, 50) du document (200), dans lequel le circuit électrique (1) est formé par une structure de tracés conducteurs (12) électrique et par au moins un composant (100) électronique relié de manière électrique à la structure de tracés conducteurs (12) électrique, dans lequel la couche de film de support (10) comprenant le circuit électrique (1) et au moins deux autres couches de film (20, 30, 40, 50) sont disposées les unes au-dessus des autres, dans lequel la couche de film de support (10) et les autres couches de film (20, 30, 40, 50) du document (200) sont formées à partir de matériaux polymères, parmi lesquels le matériau polymère de la couche de film de support (10) présente une température de transition vitreuse T_{g.TF}, qui est supérieure d'au moins 20 °C à la température de transition vitreuse T_{g.DF} du matériau polymère au moins d'un des autres films (20, 30, 40, 50) du document (200), **caractérisé en ce que** le matériau polymère de la couche de film de support (10) contient du polycarbonate ou est constitué de polycarbonate, et **en ce que** le matériau polymère des autres couches de film (20, 30, 40, 50) du document (200) contient du polycarbonate ou est constitué de polycarbonate.

2. Document (200) selon la revendication 1, **caractérisé en ce que** le matériau polymère de la couche de film de support (10) est un polycarbonate à base de bisphénol A ou d'un de ses dérivés.

3. Document (200) selon l'une quelconque des revendications précédentes, **caractérisé en ce que** le matériau polymère des autres couches de film (20, 30, 40, 50) du document (200) est un polycarbonate à base de bisphénol A ou d'un de ses dérivés.

4. Document (200) selon l'une quelconque des revendications précédentes, **caractérisé en ce que** la structure de tracés conducteurs (12) électrique est formée par une structure d'antennes, et **en ce que** le composant (100) électronique est formé par une puce de transpondeur de sorte que le circuit électrique (1) forme une unité de transpondeur.

5. Document (100) selon la revendication 4, **caractérisé en ce que** la puce de transpondeur (100) est un élément de circuit de commutation à semi-conducteurs sans enceinte.

6. Document (200) selon l'une quelconque des revendications 4 et 5, **caractérisé en ce que** la puce de transpondeur (100) est montée selon la technique de la puce retournée.

7. Document (200) selon l'une quelconque des revendications précédentes, **caractérisé en ce que** la structure de tracés conducteurs (12) électrique est formée par impression d'une pâte conductrice ou d'une peinture sur la couche de film de support (10).

8. Document (200) selon l'une quelconque des revendications précédentes, **caractérisé en ce que** le document (200) est un document de valeur et/ou un document de sécurité.

9. Procédé pour fabriquer le document (200) selon l'une quelconque des revendications 1 à 8, comprenant les étapes de procédé suivantes comprenant :
(a) fournir un circuit électrique (1) sur une couche de film de support (10), dans lequel le circuit électrique (1) est formé par une structure de tracés conducteurs (12) électrique appliquée sur la couche de film de support (10) et par un composant (100) électronique relié de manière électrique à la structure de tracés conducteurs (12) électrique ;
(b) rassembler la couche de film de support (10) pour le circuit électrique (1) et au moins deux autres couches de film (20, 30, 40, 50) afin de former un empilement de couches de film (70) ;
(c) laminer l'empilement de couches de film (70) sous l'effet d'une pression élevée et d'une température élevée en formant le document (200) ;
dans lequel la couche de support de film (10) et les autres couches de film (20, 30, 40, 50) du document (200) sont formées à partir de matériaux polymères, parmi lesquels le matériau polymère de la couche de film de support (10) présente une température de transition vitreuse T_{g.TF}, qui est supérieure d'au moins 20 °C à la température de transition vitreuse T_{g.DF} du matériau polymère au moins d'un des autres films (20, 30, 40, 50) du document (200),
**caractérisé en ce que** le matériau polymère de la couche de film de support (10) contient du polycarbonate ou est constitué de polycarbonate, et **en ce que** le matériau polymère des autres couches de film (20, 30, 40, 50) du document (200) contient du polycarbonate ou est constitué de polycarbonate.
